Europäisches Patentamt

**European Patent Office**

Office européen des brevets

(19)

(11) Veröffentlichungsnummer: **0 103 151**
**B2**

(12) **NEUE EUROPÄISCHE PATENTSCHRIFT**

(45) Veröffentlichungstag der neuen Patentschrift:
**02.01.91**

(51) Int. Cl.⁵: **H 02 H 7/26, H 02 H 11/00**

(21) Anmeldenummer: **83107748.2**

(22) Anmeldetag: **05.08.83**

(54) **Verfahren zum Betrieb einer elektrischen Energieverteilungsanlage.**

(30) Priorität: **16.08.82 DE 3230468**

(43) Veröffentlichungstag der Anmeldung:
**21.03.84 Patentblatt 84/12**

(45) Bekanntmachung des Hinweises auf die
Patenterteilung:
**03.12.86 Patenblatt 86/49**

(45) Bekanntmachung des Hinweises auf die
Entscheidung über den Einspruch:
**02.01.91 Patentblatt 91/01**

(84) Benannte Vertragsstaaten:
**AT BE CH DE FR GB IT LI LU NL SE**

(56) Entgegenhaltungen:
**DE-A-2 607 622**
**DE-A-3 026 126**

**SIEMENS ZEITSCHRIFT, Band 49, Nr. 4, 1975,
Seiten 250-253, Erlangen, DE. G. BONIN et al.:
"Schaltfehlerschutzgeräte 8TJ2 in
Bausteintechnik".**

(73) Patentinhaber: **Siemens Aktiengesellschaft**
**Wittelsbacherplatz 2**
**D-8000 München 2 (DE)**

(72) Erfinder: **Allmendinger, Hans-Dieter**
**Birkenstrasse 8**
**D-8551 Hemhofen (DE)**
Erfinder: **Blau, Heinrich-Werner**
**Hohe Warte**
**D-8521 Spardorf (DE)**
Erfinder: **Fiedler, Gerhard**
**Schützenstrasse 15**
**D-1000 Berlin 42 (DE)**
Erfinder: **Görtz, Bernd**
**Vogelherd 114**
**D-8520 Erlangen (DE)**
Erfinder: **Kummutat, Gerhard**
**Rieppelstrasse 11**
**D-1000 Berlin 13 (DE)**
Erfinder: **Leibold, Helmut**
**Saubertstrasse 3**
**D-8500 Nürnberg (DE)**
Erfinder: **Müller, Willi, Dr.**
**Am Kinderdorf 51**
**D-1000 Berlin 22 (DE)**
Erfinder: **Nobis, Rolf**
**Adolf-Marten-Strasse 8**
**D-1000 Berlin 45 (DE)**
Erfinder: **Schenk, Jakob**
**Am Ziegelacker 10**
**D-8521 Rathsberg (DE)**

EP 0 103 151 B2

Courier Press, Leamington Spa, England.

(56) References cited:

Digital Techniques for Control and Protection of Transmissio Class Substations , WS-79-184 , Workshops Proceedings, Aug. 1980, San Diego, California, Nov. 15-16, 1979, Electric Power Research Institute, 3412 Hillview Avenue, Palo Alto, California 94304

VEM-Handbuch Schaltanlagen, Bd. 1, VEB Verlag Technik Berlin 1960, Seiten 183-189

BBC Druckschrift D SI 122081D, Mittelspannungs-Sekundär-Block (MSB), vom 05.12.1981

Zeitschrift "Siemens Energietechnik" 3 (1981), Heft 1, Seiten 20-23

Erfinder: **Schmitz, Werner**
**Stintzingstrasse 29**
**D-8520 Erlangen (DE)**
Erfinder: **Waldmann, Hermann, Dr.**
**Wiesenstrasse 14**
**D-8521 Uttenreuth (DE)**
Erfinder: **Zurowski, Erwin**
**Langgasse 26a**
**D-8550 Forchheim (DE)**

**Beschreibung**

Die vorliegende Erfindung betrifft ein Verfahren zum Betrieb einer elektrischen Energieverteilungsanlage mit mehreren, einer Station untergeordneten Schaltfeldern und Übertragung von digitalen Signalen zwischen Station und Schaltfeldern.

Nach der DE-A-30 26 126 ist es bekannt, für den gesamten digitalen Datenverkehr zwischen den einzelnen Schaltfeldern — in der genannten Offenlegungsschrift mit Außenstationen bezeichnet — und der Station einen von letzterer gesteuerten zentralen Bus vorzusehen. Dieser zentrale Datenübertragungskanal und die zentrale Bussteuerung sind vom sicherheitstechnischen Aspekt gesehen Schwachstellen, denn ein Ausfall dieser Komponenten würde den ganzen Betrieb lahmlegen.

Nach der vom Electric Power Research Institute herausgegebenen Druckschrift WS-79-184, August 1980, Seiten 1-10 und 1-12, ist ebenfalls ein Verfahren zum Betrieb einer elektrischen Energieverteilungsanlage mit mehreren, einer Station untergeordneten Schaltfeldern bekannt. Dort ist innerhalb des Stationsgebäudes ein Stationsrechner zur Erfüllung zentraler leittechnischer Funktionen vorgesehen, dessen Steuersignale auf einen Ringbus geschickt werden, an welchem mehrere Gruppen von im Verbund betriebenen Mikroprozessoren (Cluster) angeschlossen sind, die jeweils über einen Datenbus miteinander verbunden sind. Diese Prozessoren nehmen Steuer- und Schutzfunktionen bezüglich der einzelnen Schaltfelder wahr und sind mit diesen über den Datenbus mit 1-Bit-Leitungen sternförmig verbunden. Es werden die für die Schaltfelder bestimmten Steuersignale des zentralen Stationsrechners also teilweise auch hier über zentrale Datenschienen (Busse) übertragen.

Die vorliegende Erfindung hat zur Aufgabe, ein Verfahren anzugeben, mit dem für die leittechnischen Funktionen beim Betrieb einer Energieverteilungsanlage mit einer sehr geringen Anzahl von zentralen, d.h. allen Schaltfeldern gemeinsamen Komponenten ausgekommen werden und die Betriebs- und Ausfallsicherheit gesteigert werden kann.

Gelöst wird diese Aufgabe erfindungsgemäß bei einem Verfahren der eingangs genannten Art mit den im Hauptanspruch angegebenen Merkmalen. Dezentral in den einzelnen Schaltfeldern erarbeitete Informationsgrößen können also mittels je einer besonderen Leitung sehr schnell zu der Station übertragen werden und speziell für die Aufgabe des Schaltfehlerschutzes werden zentrale Dienste der Station überhaupt nicht mehr benötigt. Der konsequent sternförmige Aufbau der Übertragungswege mit Punkt- zu Punkt-Verbindungen bietet weiterhin den Vorteil einer schnelleren Eingrenzbarkeit des Fehlers bei einer Verbindungsunterbrechung, der Reduzierung der Datenrate pro Übertragungsweg und der problemlosen Erweiterungsfähigkeit.

Die Erfindung samt ihren weiteren Ausgestaltungen, welche in abhängigen Ansprüchen gekennzeichnet sind, sollen nachstehend anhand der Figuren näher erläutert werden.

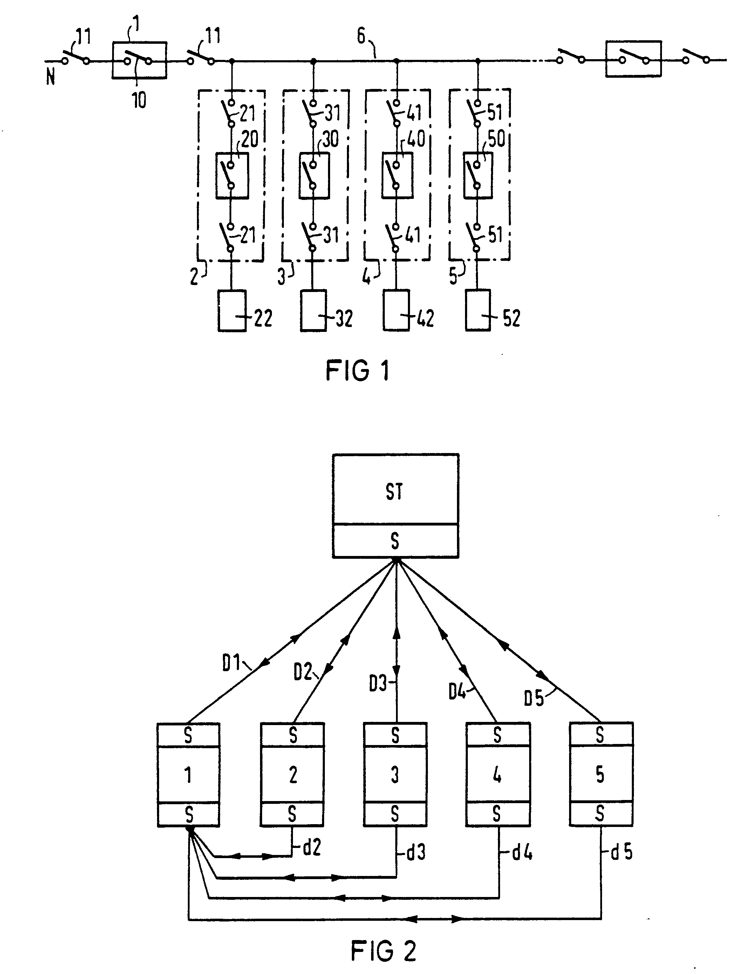

Figur 1 zeigt beispielhaft die Konfiguration einer aus fünf Schaltfeldern 1-5 bestehenden Schaltanlage, welche einer nicht dargestellten Station untergeordnet sein sollen. Das mit 1 bezeichnete Schaltfeld weist einen Leistungsschalter 10 und zwei mit ihm in Reihe liegende Trennschalter 11 auf und verbindet eine Sammelschiene 6 mit einer zweiten Sammelschiene N. Ein derartiges Schaltfeld wird auch als Kuppelfeld bezeichnet. Mit der Sammelschiene 6 können über Leistungs- und Trennschalter 20, 21, bzw. 30, 31 bzw. 50, 51 mit 22, 32, 42 und 52 bezeichnete Verbraucher verbunden werden. Die Schaltfelder 2-5 stellen sogenannte Abzweige dar. Aus Gründen der Übersichtlichkeit sind Erdungsschalter in die Darstellung der Fig. 1 nicht aufgenommen worden.

Figur 2 zeigt die Anordnung der Übertragungswege zwischen der aus den Schaltfeldern 1-5 bestehenden Schaltanlage und der übergeordneten Station ST. Zwischen der Station und jedem Schaltfeld ist mindestens ein in zwei Senderichtungen betreibbarer 1-Bit breiter Übertragungskanal D1-D5 vorgesehen, auf welchem von und zur Station Impulstelegramme übertragen werden können. Derartige sternförmig verlaufende 1-Bit breite Übertragungskanäle d2-d5 sind auch zwischen dem Schaltfeld 1 (Kuppelfeld) und den übrigen Schaltfeldern 2-5, den Abzweigen, vorgesehen. Auf den Übertragungskanälen d2-d5 findet der für den Schaltfehlerschutz erforderliche Datenaustausch statt, welcher im wesentlichen darin besteht, in jedem Abzweig aus den Stellungsmeldungen der einzelnen Schalter ein digitales Abbild des Betriebszustandes zu erzeugen, dieses dem Kuppelfeld mitzuteilen, es dort mit dem Abbild des Kuppelfeldes zu einem Gesamtbild zusammenzusetzen und dieses Gesamtbild dann anschließend an die einzelnen Schaltfelder zurückzuübertragen, wo dann eine Prüfung der sogenannten Verriegelungsbedigungen, d. h. die Faststellung der Zulässigkeit einer im Schaltfeld angeforderten Schalthandlung erfolgt.

Es ist zweckmäßig, die einzelnen leittechnischen Funktionen bzw. den Schaltfehlerschutz mit Mikroprozessoren zu realisieren. Da diese die übertragenen Daten mehrfach parallel, z. B. 8-Bit breit abarbeiten können, werden die Übertragungsleitungen beidseitig mit Serien/Parallel- bzw. Parallel-Serienwandlern S abgeschlossen. Derartige Schnittstellen sind bekannt. So ist z. B. der Intel 8521 (USART = Universal Synchronous and Asynchronous Receiver and Transmitter) ein für den Mikroprozessor 80 80 (Intel) geeigneter handelsüblich erhältlicher Schnittstellenbaustein.

Es kann sich als zweckmäßig erweisen, die Übertragungskanäle D1-D5 in mehrere parallele Übertragungswege mit unterschiedlicher Übertragungsrate aufzuteilen. So können z. B. für die zentralen Aufgaben der Station wie Sammelschienendifferentialschutz und Parallelschalten die hierzu erforderlichen Augenblickswerte von Strom und Spannung aus den Abzweigen nach vorheriger entsprechender Digital/Analog-Wandlung schnell, z. B. jede Millisekunde in die Station über eine 250 kBd (kilobaud) Leitung aus Lichtleitern übertragen werden, während für das ebenfalls zentral in der Station durchzuführende Fernwirken, Nahsteuern und Protokollieren man mit Leitungen kleinerer Übertragungsrate von z. B. 20 kBd auskommt. Für den Schaltfehlerschutz schließlich genügt schon ein Licht oder Drahtleiter mit 4.8 kBd. Auf derselben Leitung wie die Augenblickswerte von Strom und Spannung können die Trennerrückmeldungen der einzelnen Abzweige übertragen und in einem Abbild in der Station abgespeichert werden. Für die Sammelschienenspannungsnachbildung wird anhand des Trennerabbildes eine Abzweigspannung ausgewählt und als Sammelschienenspannung an die betreffenden Abzweige verteilt. Für den Sammelschienenschutz werden anhand des Trennerabbildes die zugehörigen Abzweigströme ausgewählt und dis Ausschaltbefehle an die Leistungsschalter varteilt. Dabei werden dezentral in jedem einzelnen Abzweig durch Wandlersättigung verfälschte Stromwerte erkannt und mit einem Sättigungskriterium in die Station übertragen. Auch das Kriterium für den Schaltversagerschutz kann zweckmäßigerweise im Abzweig gebildet, zur Station übertragen und anhand des dort erstellten Trennerabbildes in die betreffenden Abzweige wieder verteilt werden.

## Patentansprüche

1. Verfahren zum Betrieb einer elektrischen Energieverteilungsanlage mit mehreren einer Station untergeordneten Schaltfeldern und Übertragung von digitalen Signalen zwischen Station und Schaltfeldern, wobei in der Station und in den Schaltfeldern Mikroprozessoren angeordnet sind und eine Übertragung von digitalen Signalen zwischen Station und Schaltfeldern ausschließlich auf 1-Bit-breiten, die einzelnen Schaltfelder sternförmig mit der Station verbindenden Übertragungswegen (D1 bis D5) erfolgt und zum Zwecke des Schaltfehlerschutzes eine Signalübertragung zwischen einem bestimmten Schaltfeld (1) und allen übrigen Schaltfeldern auf 1-Bit-breiten Übertragungswegen (d2 bis d5) erfolgt, welche das bestimmte Schaltfeld (1) mit jedem der übrigen Schaltfelder (2 bis 5) sternförmig verbinden.

2. Verfahren nach Anspruch 1, dadurch gekennzeichnet, daß in den Schaltfeldern (1-5) Analog/Digital-Wandler für die Augenblickswerte von Strom und Spannung vorgesehen sind und diese Augenblickswerte in kurzen zeitlichen Abständen über Lichtleiter zur Station (ST) übertragen werden.

3. Verfahren nach Anspruch 1 oder 2, dadurch gekennzeichnet, daß Trennerrückmeldungen aus den Schaltfeldern in kurzen zeitlichen Abständen über Lichtleiter zur Station (ST) übertragen und dort in einem digitalen Abbild gespeichert werden.

4. Verfahren nach Anspruch 3, dadurch gekennzeichnet, daß das Schaltversagerschutzkriterium jeweils im Schaltfeld (1-5) gebildet, über Lichtleiter zur Station (ST) übertragen und von dort anhand des Trennerabbildes über Lichtleiter an die betreffenden Schaltfelder (1-5) verteilt wird.

## Revendications

1. Procédé d'exploitation d'une installation de distribution de l'énergie électrique comportant plusieurs cellules de connexion subordonnées à une station et pour la transmission de signaux numériques entre la station et les cellules de connexion, dans lequel des microprocesseurs sont prévus dans la station et dans les cellules de connexion, alors qu'une transmission de signaux numériques entre la station et les cellules de connexion s'effectue exclusivement par des voies de transmission (D1 à D5) d'une largeur de 1 bit qui relient en étoile les différentes cellules avec la station alors que dans le but de la protection d'une commutation erronée une transmission de signaux intervient entre une cellule de connexion déterminée (1) et toutes les autres cellules de connexion sur des voies de transmission (d2 à d5) d'une largeur de 1 bit qui relient en étoile la cellule de connexion determinée (1) avec chacune des autres cellules de connexion (2 à 5).

2. Procédé selon la revendication 1, caractérisé par le fait qu'il est prévu dans les cellules de connexion (1-5) des convertisseurs analogiques/numériques pour les valeurs instantannées de courant et de la tension et que ces valeurs instantannées sont transmises à des intervalles de temps courts à la station (ST), par l'intermédiaire de guides de lumière.

3. Procédé selon la revendication 1 ou 2, caractérisé en ce que des accusés de réception de sectionneurs des cellules sont transmis à des courts intervalles de temps au poste (ST) à travers des guides de lumière et sont mémorisés au poste (ST) dans une représentation numérique.

4. Procédé selon la revendication 3, caractérisé en ce que le critère de protection contre les défaillances de coummutation est établi chaque fois dans la cellule (1-5), est transmis au poste (ST) à travers des guides de lumière et est distribué de là aux cellules concernées (1-5) à travers des guides de lumière.

## Claims

1. Method of operating an electric power distribution system, having several switch panels subordinate to a station, and transmitting digital signals between station and switch panels, wherein microprocessors are arranged in the station and in the switch panels and transmission of digital signals between station and switch panels takes place exclusively on 1-bit wide transmission paths (D1 to D5) which connect the individual switch panels to the station in star configuration and for the purposes of protection against switching faults signal transmission between a specified switch panel (1) and all the remaining switch panels takes place on 1-bit wide transmission paths (d2 to d5) which connect the specified switch panel (1) to each of the remaining switch panels (2 to 5) in star configuration.

2. Method according to claim 1, characterised in that analog/digital converters for the instantaneous values of current and voltage are provided in the switch panels (1-5) and these instantaneous values are transmitted to the station (ST) at short temporal intervals via light guides.

3. Method according to claim 1 or 2, characterised in that isolator check-back signals from the switch panels are transmitted to the station (ST) at short time intervals via light guides and are stored there in a digital representation.

4. Method according to claim 3, characterised in that the protection criterion against switching failure is formed in the respective switch panel (1-5), transmitted via light guides to the station (ST) and thence distributed on the basis of the isolator representation via light guides to the relevant switch panels (1-5).

EP 0 103 151 B2

FIG 1

FIG 2